# EUROPÄISCHE PATENTANMELDUNG

(11) **EP 1 264 677 A2**
(43) Veröffentlichungstag der Anmeldung: **11.12.2002**
(21) Anmeldenummer: 02001659.8
(22) Anmeldetag: 24.01.2002
(51) Int. Cl.: B29C 45/44, B29C 45/33, B29C 45/56

(54) **Spritzgiessform zur Herstellung von Kugellagerringen, Verfahren zur Formung der Kugellagerringe und nach diesem Verfahren hergestellte Kugellagerringe**

(30) Priorität: 06.06.2001 DE 10127566
(71) Anmelder: Rudolf Riedel GmbH & Co KG, 58579 Schalksmühle (DE)
(72) Erfinder: Baukloh, Horst, 58540 Meinerzhagen (DE); Eckmann, Detlef, 58511 Lüdenscheid (DE)
(74) Vertreter: Hassler, Werner, Dr.

(57) **Zusammenfassung**

Eine Spritzgießform zur Herstellung von Kugellagerringen mit Laufrillen, wobei auf einem in axialer Richtung verschiebbaren Träger in radialer Richtung Formsegmente mit Ringstegen für die Laufrillen verschiebbar sind. Das technische Problem ist die Bereitstellung einer Spritzgießform, die eine trennmarkierungsfreie Herstellung von Lagerrillen in Kugellagerringen erlaubt. Mindestens ein Formsegment (9) weist auf dem Ringsteg einen Nocken (25) zur Endformung der Laufrille (2) auf, und der Halter (11) und die Formsegmente (8, 9) sind drehbar ausgebildet.

## Beschreibung

Die Erfindung betrifft eine Spritzgießform mit zusammenfaltbarem Kern zur Herstellung von Kugellagerringen mit Laufrillen, wobei auf einer in axialer Richtung verschiebbaren Trägerplatte in radialer Richtung Formsegmente mit Ringstegen für die Laufrillen bewegbar sind.

Anwendungsgebiet der Erfindung sind Kugellagerringe als Spritzgießformteile aus einem Thermoplast.

Zur Herstellung von Thermoplastformteilen mit Hinterschneidungen sind Spritzgießformen mit sogenannten Faltkernen bekannt. Ein derartiger Faltkern ist in der DE 26 19 064 C3 beschrieben. Die Formsegmente, normalerweise sechs Formsegmente über den vollen Umfang, bewirken in den Stoßkanten Trennmarkierungen oder andere Ungleichmäßigkeiten, die innerhalb von Lagerrillen eines Kugellagers nicht tragbar sind.

Aufgabe der Erfindung ist die Breitstellung einer Spritzgießform, die eine Formung der Laufrillen und eine Entformung des Werkzeugs ermöglicht.

In Verbindung mit dem Oberbegriff des Patentanspruchs 1 wird diese Aufgabe dadurch gelöst, daß mindestens ein Formsegment auf dem Ringsteg einen Nocken zur Endformung der Laufrille aufweist und daß der Halter und die Formsegmente drehbar ausgebildet sind.

Die Erfindung unterscheidet sich insofern vom Stand der Technik, als durch Drehung des Trägers und der Formsegmente mit den jeweiligen Nocken bei der Endformung der Laufrille eine Verdichtung und Vergleichmäßigung des Materials der Wandung der Laufrille während der Abkühlung und Verfestigung bewirkt wird. Dadurch erzielt man eine Laufrille hochwertiger Qualität mit verfestigter und trennmarkierungsfreier Wandung.

Insbesondere betrifft die Erfindung eine Spritzgießform zur Herstellung von Außenringen mit Laufrillen, wobei eine Platte eines Mehrplattenaufbaus als Träger einen Innenkern mit Segmentflächen unterschiedlicher Neigung zur Achse aufnimmt und wobei eine weitere Platte die zu den Segmentflächen passenden Formsegmente führt.

Hier sieht die Erfindung vor, daß der Innenkern und die Formsegmente in den jeweiligen Platten drehbar gelagert und durch einen Antrieb antreibbar sind. Der Antrieb kann ein Hydromotor, ein Elektromotor oder ein anderer Motor sein.

Eine genaue und ausgeglichene Formgebung erreicht man dadurch, daß sechs Formsegmente vorgesehen sind und daß jedes zweite Formsegment einen Nocken trägt, dessen Radius dem Sollradius der Laufrille gleich ist. Dadurch ergibt sich ein symmetrischer Ausgleich der Formkräfte bei der Drehung.

In der Einspritzphase wird die Laufrille derart geformt, daß alle Formsegmente einen Ringsteg zur Formung der Laufrille aufweisen, dessen Querschnitt kleiner als der Sollquerschnitt der Laufrille ist.

Die Drehung wird dadurch bewirkt, daß in Platten jeweils ein auf dem Innenkern sitzendes Zahnrad sowie ein damit kämmendes Antriebszahnrad drehbar gelagert sind.

Die Formsegmente werden dadurch innerhalb der Spritzgießform genau geführt, daß in weiteren Platten eine Buchse drehbar gelagert ist, die radiale Flanschsegmente der Formsegmente aufnimmt.

Zur Herstellung von Innenringen mit Laufrillen schlägt die Eerfindung vor, daß der als Glocke ausgebildete Halter in Schwalbenschwanzführungen einer kegelförmigen Aufnahme zwei Formbacken mit Ringstegen führt und in einer Platte drehbar gelagert sowie durch einen Antrieb antreibbar ist und daß auf jedem Ringsteg ein Nocken sitzt. Dadurch läßt sich die Laufrille auf der Außenfläche des Innenrings trennmarkierungsfrei ausformen.

Die radialer Trennung der Formbacken wird dadurch bewirkt, daß innnerhalb der Glocke eine Abstreiferhülse verschiebbar ist, die mit einer Umfangsstufe an der Rückseite der Formbacken anliegt.

Zur Herabsetzung der Reibung bei der Drehung der Formbacken wird vorgeschlagen, daß den Formbacken in der düsenseitigen Platte ein drehbar gelagerter Gegenhalter gegenübersteht.

Das Verfahren zur Herstellung von Kugellagerringen zeichnet sich nach der Erfindung dadurch aus, daß nach der Einspritzphase während der Abkühlung der Formmasse die Formsegmente oder die Formbacken um die Achse des Formkerns gedreht werden, so daß unter der Wirkung der Nocken eine Endformung der Laufrille und eine zusätzliche Verfestigung der Formmasse in der Wandung der Laufrille bewirkt wird.

Schließlich betrifft die Erfindung einen nach diesem Verfahren hergestellten Innenring oder Außenring eines Radialkugellagers, bei dem die Wandung der Laufrille eine Verdichtung und Verfestigung aufweist.

Die Trennmarkierungen der Formsegmente und der Backen werden dadurch vollstängig ausgeglichen, daß die Segment- bzw. Backentrennmarkierungen durch die Drehbewegung der glatten Ringkanten angeglichen sind.

Ein Ausführungsbeispiel der Formung eines Außenrings und ein Ausführungsbeispiel der Formung eines Innenrings werden anhand der Zeichnungen erläutert, in denen darstellen:
Fig. 1 einen Außenring im Schnitt,
Fig. 2 eine Stimansicht des Außenrings mit schematisch angedeutetem Formkern,
Fig. 3 die geschlossene Spritzgießform im Schnitt unmittelbar nach Abschluß der Einspritzphase,
Fig. 4 einen Schnitt nach der Linie A-A in Fig. 3,
Fig. 5 eine erste Phase der Formöffnung mit Entfernung des Angusses,
Fig. 6 eine zweite Phase der Formöffnung mit Abhebung der Formplatte,
Fig. 7 eine dritte Phase der Formöffnung mit Zurückziehen des Innenkerns,
Fig. 8 eine vierte Phase der Formöffnung mit Abstreifen der Außenringe,
Fig. 9 einen Innenring im Schnitt,
Fig 10 eine Stirnansicht des Innenrings mit schematisch angedeutetem Formkern,
Fig. 11 einen Schnitt durch die geschlossene Spritzgießform unmittelbar nach dem Spritzvorgang,
Fig. 12 einen Schnitt nach der Linie A-A in Fig. 11 und
Fig. 13 die Öffnungsphase der Spritzgießform.

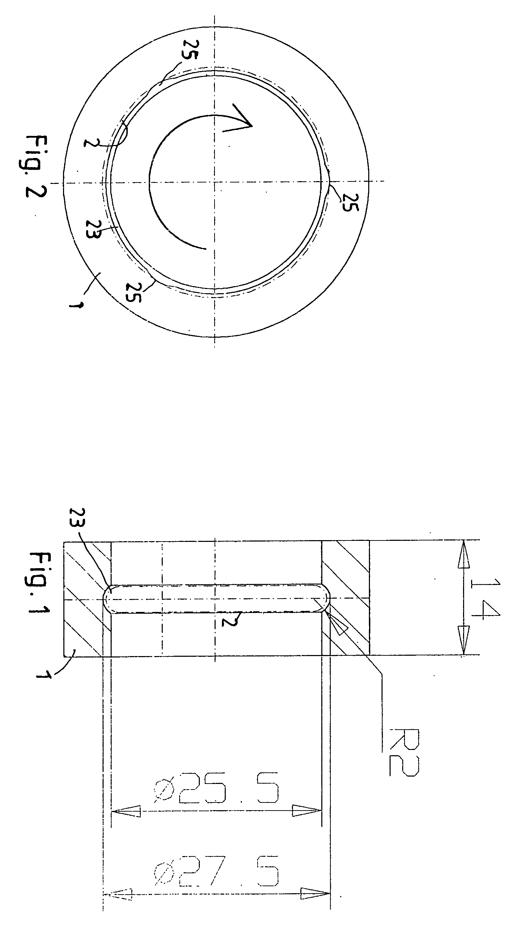

Anhand der Fig. 1 bis 8 wird die Herstellung des Außenrings eines Kugellagers erläutert. Die Figuren zeigen eine Zweifachform. Es sind auch Mehrfachformen möglich.

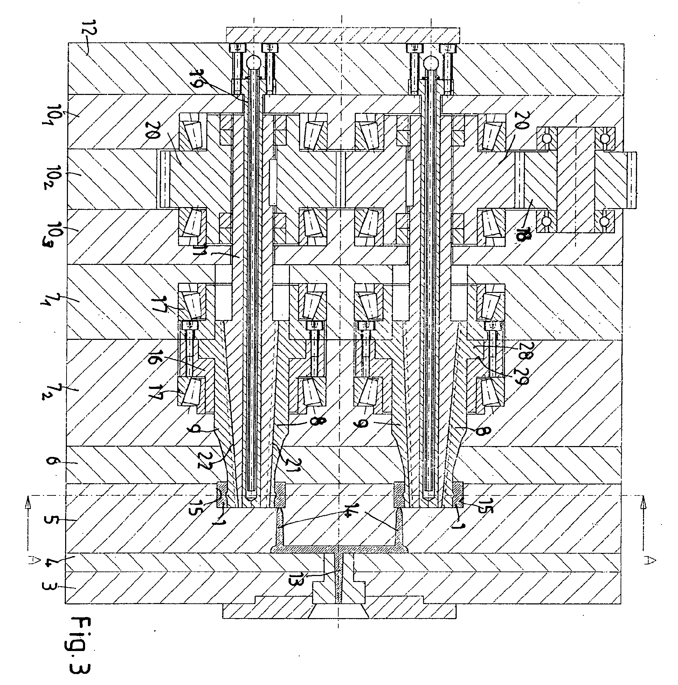

Fig. 1 zeigt einen Außenring 1 eines Kugellagers im Schnitt. Es sind der Innendurchmesser des Außenrings 1 und der Fußdurchmesser der Laufrille 2 angegebenen sowie außerdem der Sollradius R2 der Laufrille 2. In der Stirnansicht der Fig. 2 sind schematisch Einzelheiten der Formsegmente 8, 9 zur Formung der Laufrille 2 dargestellt.

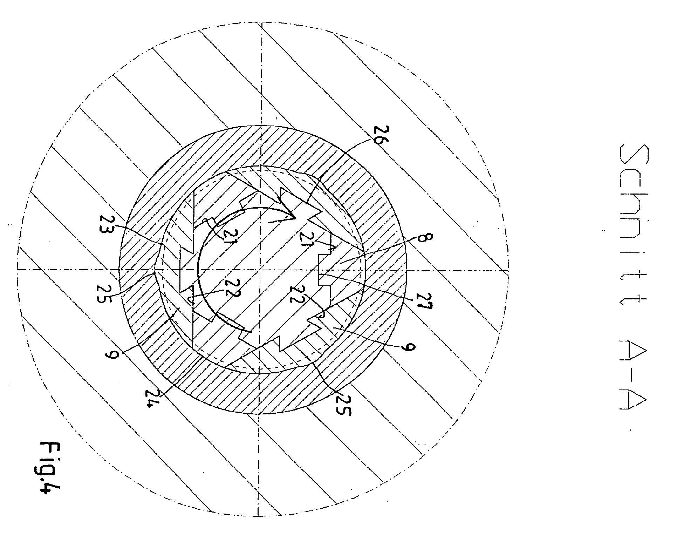

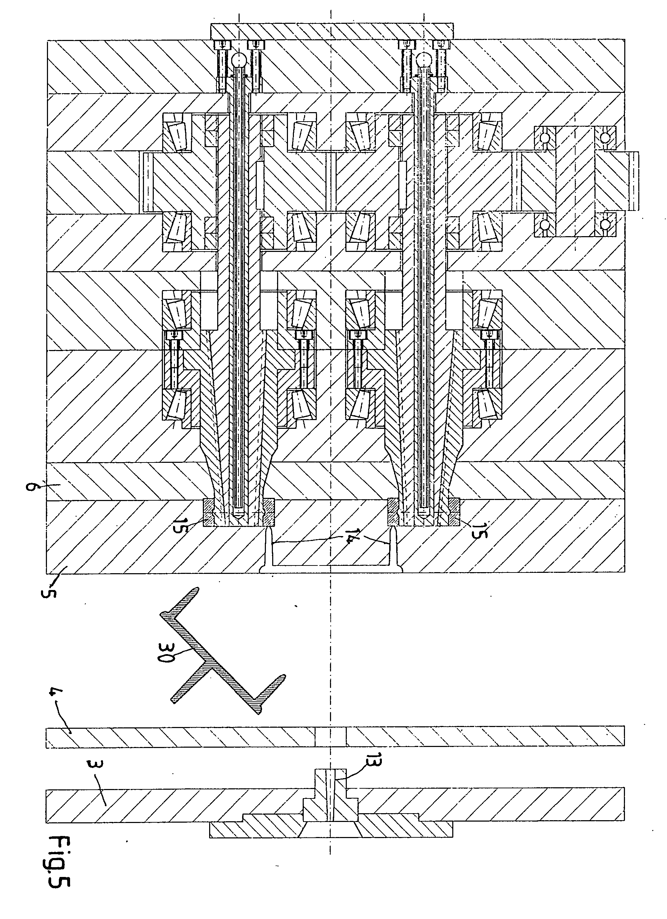

Fig. 4 zeigt die wesentlichen Teile der Spritzgießform in der Stellung unmittelbar nach Abschluß der Einspritzphase. Die Antriebsmittel für die Verschiebung der verschiedenen Platten beim Öffnen und Schließen der Form sind nicht dargestellt. Man erkennt im Einzelnen eine Düsenplatte 3, eine Abstreiferplatte 4, eine Formplatte 5 mit Kaltkanalverteiler und Punktanguß, eine Abstreiferplatte 6, einen Aufbau aus Platten 7₁, 7₂ zur Aufnahme der Formsegmente 8, 9, einen Aufbau aus Platten 10₁, 10₂, 10₃ zur Aufnahme des Halters oder Innenkerns 11 und schließlich eine Trägerplatte 12.

Die Düsenseite der Spritzgießform ist in üblicher Weise ausgebildet und umfaßt die Düsenplatte 3 mit einem Angußkanal 13 und die Abstreiferplatte 4.

Die Schließseite der Spritzgießform ist ein Mehrplattenaufbau. Innerhalb der Formplatte 5 befinden sich Angußkanäle 14 mit einem Punktanguß und zwei Formkammern 15. Die Abstreiferplatte 6 ist in üblicher Weise ausgebildet. Die Platten 7₁, 7₂ bilden ein Plattenpaket, das eine in Rollenlagern 17 gelagerte Buchse 16 aufnimmt. Die Buchse 16 weist auf der Innenwand eine Flanschaufnahme 29 auf.

Die Platten 10₁, 10₂, 10₃ bilden ein Paket, das auf der Trägerplatte 12 befestigt ist. Der Innenkem 11 sitzt auf einem rohrförmigen Träger 19, der auch Temperiereinrichtungen enthält. Der Innenkern 11 ist jeweils in dem Durchgang eines Zahnrads 20 verkeilt. Die Zahnräder 20 kämmen miteinander und mit einem Antriebsrad 18, das von einem nichtdargestellten Antrieb, z.B einem Hydromotor oder einem Elektromotor antreibbar ist. Der Innenkern 11 besitzt sechs konische Segmentflächen 21, 22 jeweils unterschiedlicher Neigung zur Achse. Die Anordnung dieser Segmentflächen 21, 22 in Umfangsrichtung ergibt sich insbesondere aus Fig. 4. Auf den Segmentflächen 21 mit größerer Neigung sind dreieckförmige Formsegmente 8 in Rechteckführungen 27 geführt. Auf den Segmentflächen 22 mit kleinerer Neigung sind kreissegmentförmige Formsegmente 9 in Schwalbenschwanzführungen 26 geführt. Die Formsegmente 9 reichen mit radialen Flanschsegmenten 28 in die Flanschaufnahmen 29 der Platten 7₁, 7₂.

Die Formsegmente 8, 9 tragen aneinander anschließende Ringstege 23, 24, die einen Umfangsringsteg bilden, dessen Querschnitt kleiner als der Sollquerschnitt der Laufrille 2 ist. Die Ringstege 23 der drei Formsegmente 9 tragen jeweils einen Nocken 25, dessen Querschnitt dem Sollquerschnitt mit dem Radius R2 der Laufrille 2 gleich ist. Die Formkammer wird somit jeweils durch die Formplatte 5, die Auswerferplatte 6 und die Formsegmente 8, 9 begrenzt.

Die Funktion der Spritzgießform ist folgende: Im Schließzustand der Spritzgießform nach Fig. 3 wird die Formmasse eingespritzt, und die Außenringe 1 werden in den Formkammern 15 geformt. Während der Abkühlphase wird das Antriebszahnrad 21 angetrieben. Dadurch werden die Innenkerne 11 mit den Formsegmenten 8, 9 gedreht. Dabei werden die Nocken 25 der Ringstege 23 wirksam und bilden die endgültige Form und Struktur der Laufrille 2 aus. Die Laufrille 2 erhält einerseits ihren Sollradius R2 und eine glatte und gleichmäßige Wandung ohne Trennmarkierungen . Andererseits wird die Wandung der Laufrille 2 verdichtet.

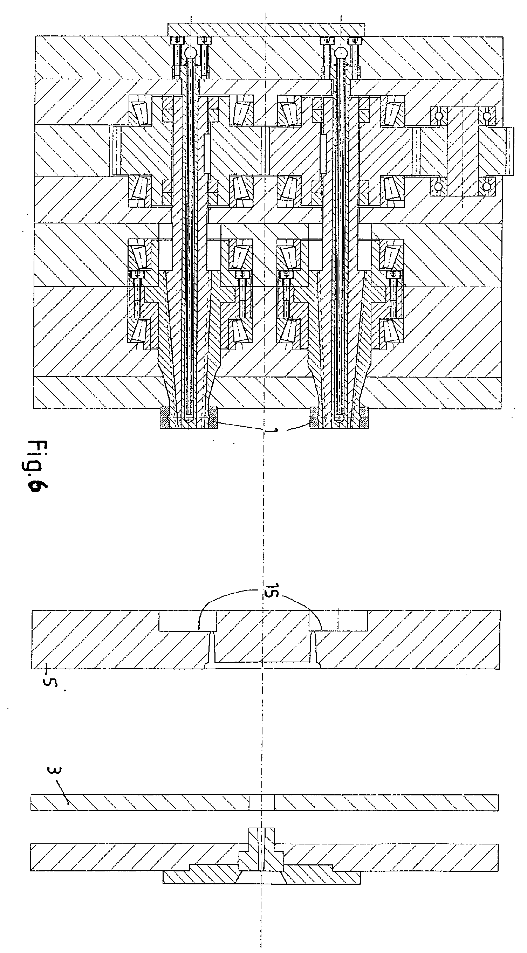

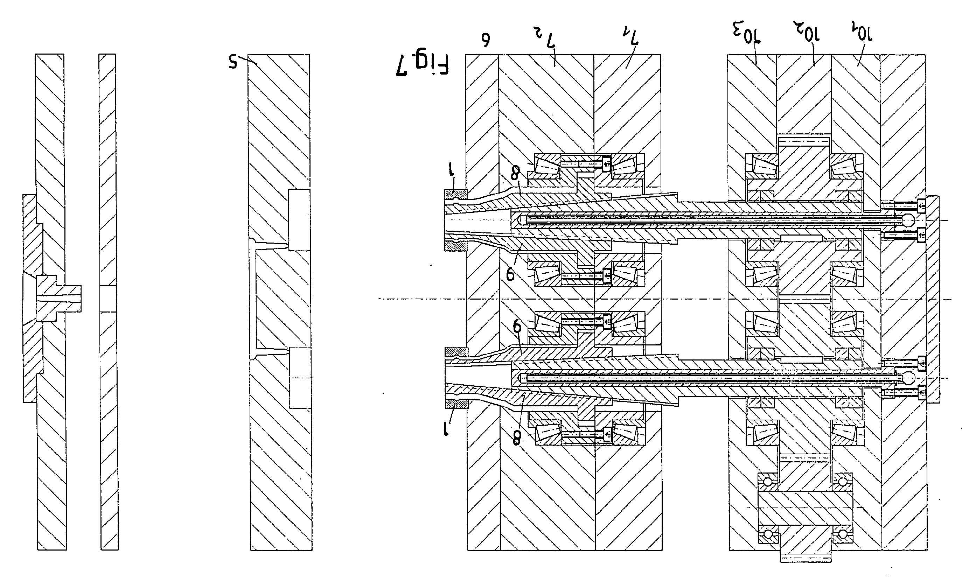

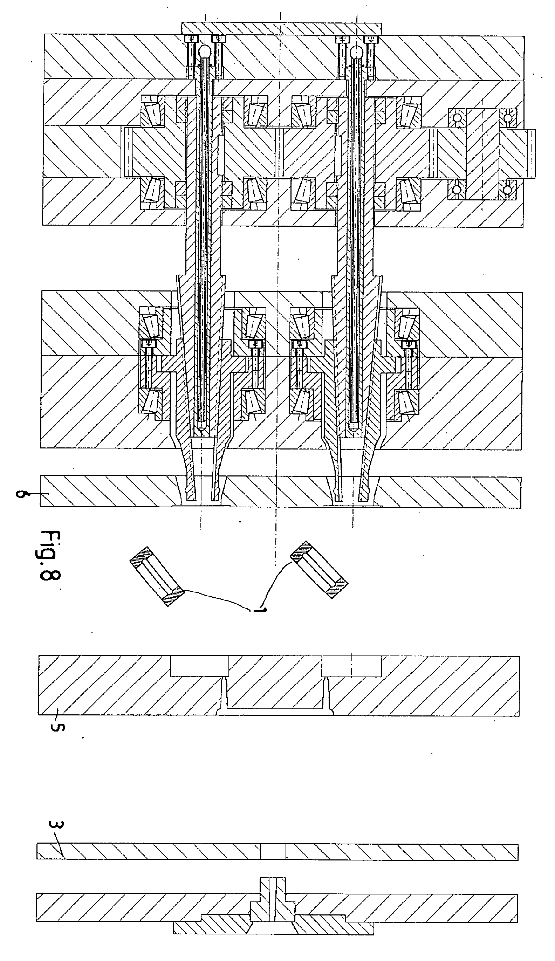

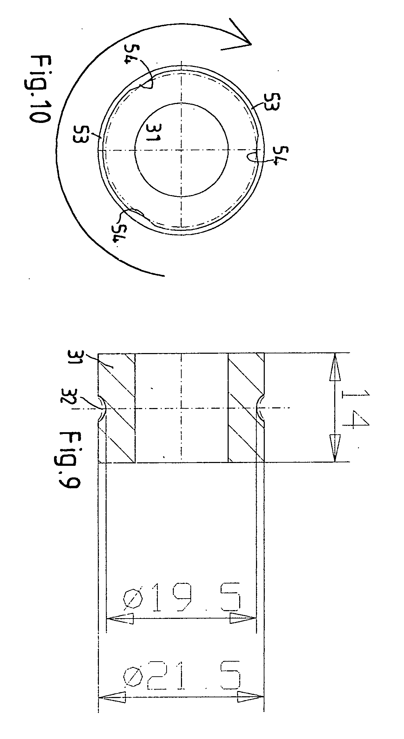

Bei der anschließenden Formöffnung wird in einer ersten Phase der Anguss gemäß Fig. 5 abgestreift. Im weiteren Verlauf der Formöffnung nach Fig. 6 wird die Formplatte 5 abgetrennt, so daß die Lagerringe 15 frei auf den Formkernen sitzen. Danach wird gemäß Fig. 7 das Paket der Platten 10₁, 10₂, 10₃ von dem Paket der Platten 7₁, 7₂ getrennt, so daß die Formsegmente 8, 9 radial nach innen fahren und die Außenringe 1 freigeben. Schließlich werden nach Fig. 8 die Außenringe 1 durch die Abstreiferplatte 6 abgestreift

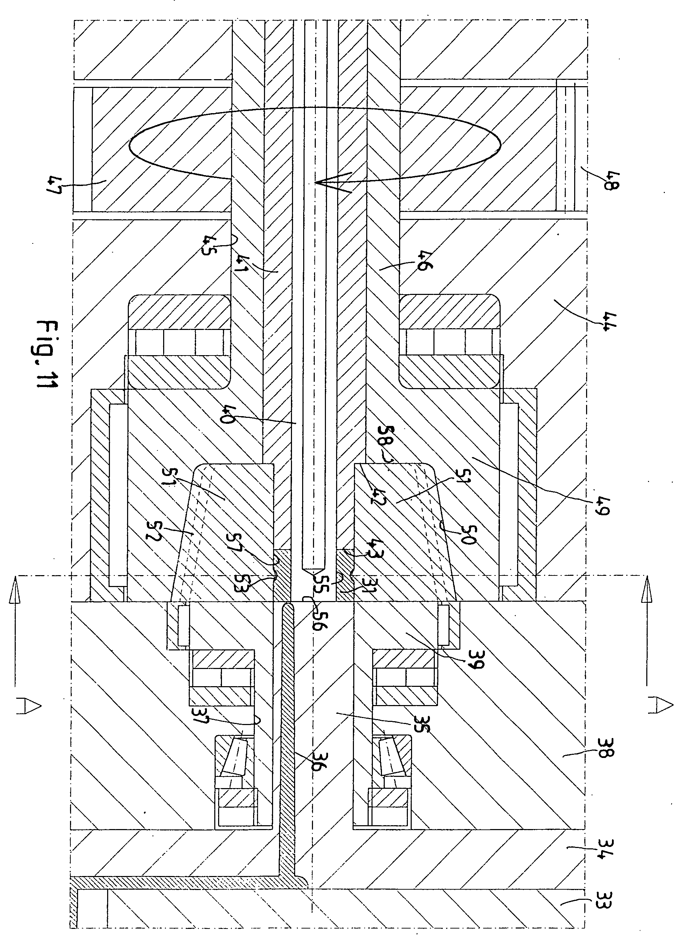

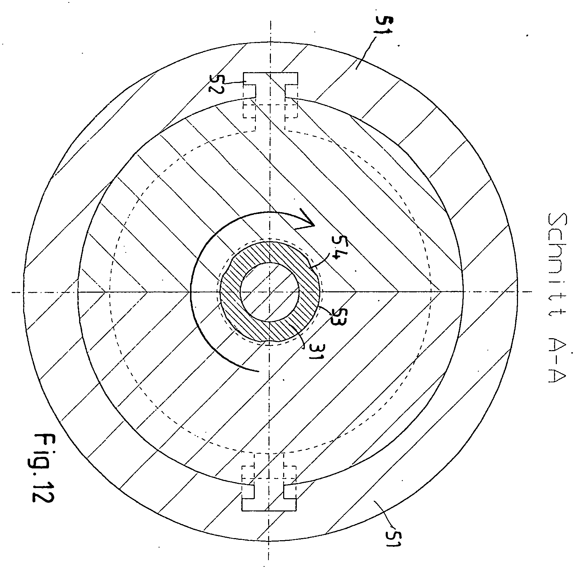

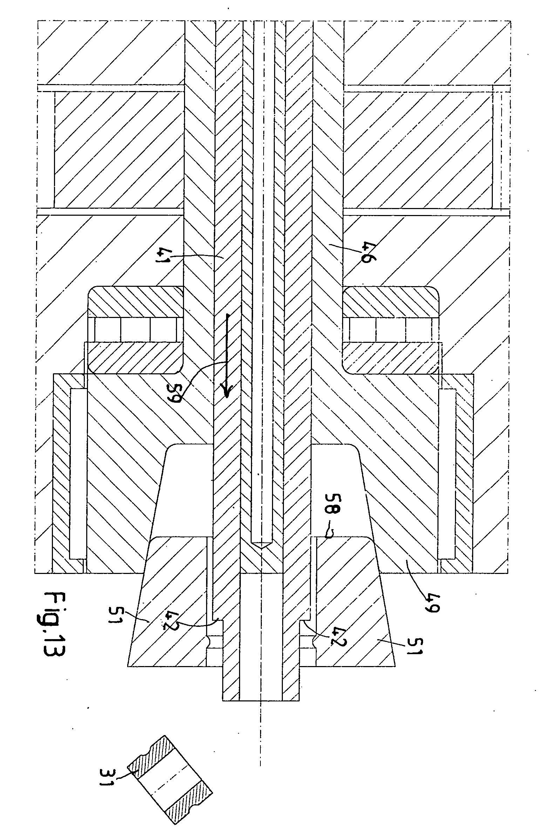

Die Fig. 9 und 10 zeigen einen Innenring 31 mit einer Laufrille 32. Das Werkzeug zur Formung dieses Innenrings 31 ist in den Fig. 11 bis 13 dargestellt. Es ist ein Einfachwerkzeug gezeigt. Das Werkzeug kann selbstverständlich auch mehrfach ausgelegt sein.

Die Düsenseite des Werkzeugs umfaßt eine Düsenplatte 33, eine Abstreiferplatte 34 und eine Zwischenplatte 38. Die Abstreiferplatte 34 hat zentral einen zylindrischen Ansatz 35, durch den ein Angußkanal 36 mit Punktanguß geführt ist und dessen Stirnwand 56 eine Wandung der Formkammer bildet. Der Ansatz 35 ist in einem Durchgang 37 der Zwischenplatte 38 aufgenommen. Zwischen dem Ansatz 35 und dem Durchgang 37 befindet sich ein drehbar gelagerter, nicht angetriebener Gegenhalter 39.

Die in einer Platte 44 angeordnete Auswerferseite des Werkzeugs umfaßt in einem Durchgang 45 der Platte 44 einen Innenkem 40 mit im Einzelnen nicht erläuterter Temperiereinrichtung, eine Abstreiferhülse 41 mit einer Umfangsstufe 42 und einer eine Wandung der Formkammer bildenden Stirnwand 43 sowie eine drehbar gelagerte Buchse 46. Die Buchse 46 trägt ein Zahnrad 47, das mit einem Antriebszahnrad 48 in Eingriff ist. Die Buchse 46 geht in eine als Halter dienende Glocke 49 mit einer kegelförmigen Aufnahme 50 über, in der zwei halbringförmige Formbacken 51 mit konischer Außenfläche in Schwalbenschwanzführungen 52 geführt sind. Die Formbacken 51 weisen jeweils einen Ringsteg 53 zur Formung der Laufrille 32 und drei über den Umfang verteilte Nocken 54 auf. Der Querschnitt des Ringsteges 53 ist kleiner als der Sollquerschnitt der Laufrille 32, wogegen die Kontur der Nocken 54 dem Sollquerschnitt der Laufrille 32 entspricht. Die Formkammer wird also durch die Stirnwand 43 der Abstreiferhülse 41, die stimseitige Umfangswand 55 der Abstreiferhülse 41, die Stirnwand 56 des Ansatzes 35 und die Innenwandung 57 der Formbacken 51 gebildet. Die Formbacken 51 stehen mit der Innenkante der Rückseite 58 an der Umfangsstufe 42 der Abstreiferhülse 41 an.

Fig. 11 zeigt das Werkzeug in der Einspritzphase mit vollständiger Füllung der Formkammer. Während der Standzeit und dem Abkühlen wird das Zahnrad 47 angetrieben und die Buchse 46 mit der Glocke 49 gedreht. Die Formbacken 51 werden bei der Drehung mitgenommen, so daß die Nocken 54 die Laufrille 32 trennmarkierungsfrei ausformen und die Innenfläche der Laufrille 32 verdichten. Bei dieser Drehung wird der drehbar gelagerte Gegenhalter 39 mitgenommen, damit die Reibung an den Formbacken 51 herabgesetzt wird.

Nach Beendigung der Kühlphase wird das Werkzeug auseinandergefahren. Fig. 13 zeigt den Abschluß der Abstreifphase des Innenrings 31. Die Abstreiferhülse 41 ist innerhalb der Buchse 46 in Pfeilrichtung 59 verschoben. Bei dieser Verschiebung werden die Formbacken 51 in den Schwalbenschwanzführungen 50 verschoben, so daß sie sich in radialer Richtung auseinander bewegen und den Lagerring 31 freigeben. Schließlich wird der Lagerring von dem Innenkern 40 abgestreift.

## Patentansprüche

1. Spritzgießform mit zusammenfaltbarem Kern zur Herstellung von Kugellagerringen mit Laufrillen, wobei auf einer in axialer Richtung verschiebbaren Trägerplatte in radialer Richtung Formsegmente mit Ringstegen für die Laufrillen bewegbar sind, **dadurch gekennzeichnet, daß** mindestens ein Formsegment (9) auf dem Ringsteg (23) einen Nocken (25) zur Endformung der Laufrille (2) aufweist und daß der Halter (11) und die Formsegmente (8, 9) drehbar ausgebildet sind.

2. Spritzgießform nach Anspruch 1 zur Herstellung von Außenringen mit Laufrillen, wobei eine Platte (10₁, 10₂, 10₃) eines Mehrplattenaufbaus als Träger einen Innenkern (11) mit Segmentflächen (21, 22) unterschiedlicher Neigung zur Achse aufnimmt und wobei eine weitere Platte (7₁, 7₂) die zu den Segmentflächen passenden Formsegmente führt, **dadurch gekennzeichnet, daß** der Innenkern (11) und die Formsegmente (8, 9) in den jeweiligen Platten (10₁, 10₂, 10₃ bzw. 7₁, 7₂) drehbar gelagert und durch einen Antrieb antreibbar sind.

3. Spritzgießform nach Anspruch 2, **dadurch gekennzeichnet, daß** sechs Formsegmente (8, 9) vorgesehen sind und daß jedes zweite Formsegment (9) einen Nocken (25) trägt, dessen Radius dem Sollradius der Laufrille (2) gleich ist.

4. Spritzgießform nach Anspruch 2 oder 3, **dadurch gekennzeichnet, daß** alle Formsegmente (8, 9) einen Ringsteg (23, 24) zur Formung der Laufrille (2) aufweisen, dessen Querschnitt kleiner als der Sollquerschnitt der Laufrille (2) ist.

5. Spritzgießform nach einem der Ansprüche 2 bis 4, **dadurch gekennzeichnet, daß** in den Platten (10₁, 10₂, 10₃) jeweils ein auf dem Innenkem (11) sitzendes Zahnrad (20) sowie ein damit kämmendes Antriebszahnrad (18) drehbar gelagert sind.

6. Spritzgießform nach Anspruch 4, **dadurch gekennzeichnet, daß** in den weiteren Platten (7₁, 7₂) eine Buchse (16) drehbar gelagert ist, die Flanschsegmente (28) der Formsegmente (8, 9) aufnimmt.

7. Spritzgießform nach Anspruch 1 zur Herstellung von Innenringen mit Laufrillen, **dadurch gekennzeichnet, daß** der als Glocke (49) ausgebildete Halter in Schwalbenschwanzführungen (52) einer kegelförmigen Aufnahme (50) zwei Formbacken (51) mit Ringstegen (53) führt und in einer Platte (44) drehbar gelagert sowie durch einen Antrieb antreibbar ist und daß auf jedem Ringsteg (53) ein Nocken (54) sitzt.

8. Spritzgießform nach Anspruch 7, **dadurch gekennzeichnet, daß** innnerhalb der Glocke (49) eine Abstreiferhülse (41) verschiebbar ist, die mit einer Umfangsstufe (42) an der Rückseite (58) der Formbacken (51) anliegt.

9. Spritzgießform nach Anspruch 7 oder 8, **dadurch gekennzeichnet, daß** den Formbacken (51) in der düsenseitigen Platte (38) ein drehbar gelagerter Gegenhalter (39) gegenübersteht.

10. Verfahren zur Herstellung von Kugellagerringen in einer Spritzgießform nach einem der Ansprüche 1 bis 9, **dadurch gekennzeichnet, daß** nach der Einspritzphase während der Abkühlung der Formmasse der Innenkem und die Formsegmente oder die Formbacken um die Achse des Formkerns gedreht werden, so daß unter der Wirkung der Nocken eine Endformung der Laufrille und eine zusätzliche Verfestigung der Formmasse in der Wandung der Laufrille bewirkt wird.

11. Innenring oder Außenring eines Radialkugellagers, hergestellt nach dem Verfahren des Anspruchs 10, **dadurch gekennzeichnet, daß** die Fläche der Laufrille eine Verdichtung und Verfestigung aufweist.

12. Innenring oder Außenring nach Anspruch 11, **dadurch gekennzeichnet, daß** die Segment- bzw. Backentrennmarkierungen durch die Drehbewegung der glatten Ringkanten angeglichen sind.
